# EUROPÄISCHE PATENTSCHRIFT

(11) **EP 1 756 700 B1**
(45) Veröffentlichungstag und Bekanntmachung des Hinweises auf die Patenterteilung: **27.11.2013**
(21) Anmeldenummer: 05749191.2
(22) Anmeldetag: 01.06.2005
(51) Int. Cl.: G06F 3/00

(54) **VERFAHREN, SYSTEM UND VORRICHTUNG ZUR KÖRPERGESTEUERTEN ÜBERTRAGUNG VON SELEKTIERBAREN DATENELEMENTEN AN EIN ENDGERÄT**
SYSTEM AND METHOD FOR BODILY CONTROLLED DATA INPUT
SYSTÈME ET MÉTHODE POUR ENTRER DES DONNÉES AU MOYEN DU CORPS

(30) Priorität: 01.06.2004 EP 04102441; 17.06.2004 EP 04102783
(43) Veröffentlichungstag der Anmeldung: 28.02.2007
(73) Patentinhaber: Swisscom AG, 3050 Bern (CH)
(72) Erfinder: RITTER, Rudolf, CH-3052 Zollikofen (CH); LAUPER, Eric, CH-3014 Bern (CH)
(74) Vertreter: BOVARD AG
(86) Internationale Anmeldenummer: PCT/EP2005/052506
(87) Internationale Veröffentlichungsnummer: WO 2005/119413

(56) Entgegenhaltungen:
- EP-A- 1 408 443
- US-A- 4 862 172
- US-A- 4 925 189
- US-A- 5 751 260
- US-A- 5 790 099
- US-A1- 2002 158 827
- KIM S C ET AL: "OPTIMUM ELECTRODE CONFIGURATION FOR DETECTION OF ARM MOVEMENT USING BIO-IMPEDANCE" MEDICAL AND BIOLOGICAL ENGINEERING AND COMPUTING, PETER PEREGRINUS, STEVENAGE, GB, Bd. 41, Nr. 2, März 2003 (2003-03), Seiten 141-145, XP001047114 ISSN: 0140-0118

## Beschreibung

### Technisches Gebiet

Die Erfindung betrifft ein Verfahren, ein System und eine Vorrichtung zur körpergesteuerten Übertragung von selektierbaren Datenelementen an ein Endgerät.

### Stand der Technik

Im Stand der Technik werden Endgeräte der Gebrauchselektronik wie beispielsweise tragbare Computer, elektronische Notizgeräte ("Pocket-PCs", "Handhelds", "Palmtops") oder Mobiltelefone immer mehr miniaturisiert. Dabei wird es für die Benutzer solcher Endgeräte zunehmend schwieriger, diese Endgeräte zu bedienen. Die Schwierigkeit liegt insbesondere bei der Eingabe von Datenelementen in solche Endgeräte. Es ist bekannt, Datenelemente mittels eines Stifts einzugeben. Dabei wird auf dem Endgerät beispielsweise eine Tastatur angezeigt und der Benutzer wählt mit dem Stift Datenelemente aus. Für eine solche Eingabemethode muss sich der Benutzer vollumfänglich auf die Eingabe von Datenelementen konzentrieren und kann beispielsweise ein gleichzeitiges Gespräch kaum weiterführen. Oft dauert eine solche Eingabe von Datenelementen viel länger als eine entsprechende Notiz in einem Notizbuch. Mittels eines speziellen Schreibbereichs auf dem Endgerät ist es im Stand der Technik auch bekannt Datenelemente mittels des Schreibens von Zeichen auf diesem Schreibbereich in das Endgerät einzugeben. Mit einer solchen Eingabe von Datenelementen kann der Benutzer die gewohnte Schreibweise oder eine leicht erlernbare Schreibweise von Zeichen zur Eingabe von Datenelementen anwenden. Da dabei eine Erkennung von Zeichen durch das Endgerät durchgeführt wird, muss der Benutzer aber ständig kontrollieren, ob Zeichen die er eingegeben hat durch das Endgerät auch korrekt erkannt wurden. Der Benutzer muss sich also wiederum viel zu stark auf die Eingabe von Datenelementen konzentrieren und kann wichtige Informationen aus seiner Umgebung während dieser Zeit nicht aufnehmen. Es ist auch möglich, Datenelemente über eine Tastatur des Endgeräts einzugeben. Damit die Tastatur nicht zu gross wird und am miniaturisierten Endgerät überhaupt angebracht werden kann, werden die Tasten der Tastatur mehrfach belegt. So wird durch einmaliges Drücken einer Taste der Buchstabe "a", durch zweimaliges Drücken dieser Taste der Buchstabe "b", durch dreimaliges Drücken dieser Taste der Buchstabe "c" oder durch viermaliges Drücken dieser Taste die Ziffer "1" eingegeben. Es ist offensichtlich, dass mit einer solchen Mehrfachbelegung von Tasten die Eingabe von nur sehr kurzen Befehlen oder Notizen ermöglicht wird. Die Eingabemethoden des Standes der Technik für die Eingabe von Datenelementen in ein Endgerät sind oft sehr umständlich. Die Eingabe von Datenelementen in das Endgerät erfordert oft zwei Hände. Nur Geübte bringen es fertig, das Endgerät auch ohne Sichtkontakt einhändig zu bedienen, dies allerdings nur für relativ einfache Befehle wie die Wahl einer Kurznummer am Mobilfunktelefon oder dem Ausschalten eines Alarms am Notizgerät. Die Eingabe von Datenelementen in ein Endgerät erfolgt im Stand der Technik immer über eine Vorrichtung, wie beispielsweise eine Tastatur oder eine Maus. Im Stand der Technik ist demzufolge keine Freihandbedienung, d.h. eine Bedienung ohne die Verwendung einer Eingabevorrichtung, von Endgeräten möglich.

In der Patentanmeldung EP 1 408 443 wird ein Verfahren zur Erkennung einer Geste eines Benutzers beschrieben. Mittels Elektroden werden EMG (EMG: Elektromyogramm) Signale erfasst. Die EMG-Signale werden analysiert und einer Geste wie beispielsweise dem Zeigen mit dem Zeigefinger, dem Ausstrecken der Handfläche oder dem Rotieren des Handgelenks zugeordnet. Mittels einer Einheit zur Generierung von Befehlen wird einer Geste ein Befehl zugeordnet und eine Vorrichtung wird entsprechend dem zugeordneten Befehl gesteuert.

### Offenbarung der Erfindung

Es ist eine Aufgabe der vorliegenden Erfindung, ein neues Verfahren, ein neues System und eine neue Vorrichtung zur körpergesteuerten Übertragung von selektierbaren Datenelementen an ein Endgerät vorzuschlagen, welche nicht die Nachteile des Standes der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass in einer Lookup-Tabelle Referenzwerte sowie zugeordnete Datenelemente abgespeichert werden, dass mittels mindestens eines an einer Körperstelle eines Benutzers anbringbaren Beschleunigungssensors durch Körperbewegungen des Benutzers beeinflussbare Erschütterungswerte erfasst werden, dass mittels eines Vergleichsmoduls Erschütterungswerte mit Referenzwerten verglichen werden und mindestens ein einem Referenzwert zugeordnetes Datenelement selektiert wird, und dass mittels eines Übertragungsmoduls das mindestens eine selektierte Datenelements an das Endgerät übertragen wird. Der mindestens eine Beschleunigungssensor kann an irgendeiner Stelle und auf irgendeine Art an einer Körperstelle des Benutzers angebracht werden. So kann beispielsweise ein Beschleunigungssensor in einer Armbanduhr, in einem Fingerring, in einem Kleidungsstück oder in einem Handschuh angebracht sein. Es ist beispielsweise auch denkbar, Beschleunigungssensoren an geeigneten Körperstellen wie beispielsweise an den Fingern eines Benutzers aufzukleben. Ein solches Verfahren hat den Vorteil, dass ein Benutzer einfach, bequem und intuitiv Datenelemente an ein Endgerät übertragen kann. Durch eine solche Übertragung von Datenelementen an ein Endgerät wird insbesondere eine für den Benutzer einfache Steuerung eines Endgeräts ermöglicht. Es ist insbesondere möglich, eine solche Übertragung von Datenelementen so durchzuführen, dass dies von Dritten nicht bemerkbar ist. Beispielsweise durch das kurze Zusammenschlagen oder Zusammenführen von Daumen und Zeigefinger kann eine Klick Funktion ausgelöst werden, wobei durch die Klick Funktion beispielsweise während einer Präsentation mit einem Projektor das Weiterschalten zur nächsten Folie der Präsentation ausgelöst wird.

In einer Ausführungsvariante werden in der Lookup-Tabelle Bildreferenzen abgespeichert werden, wobei einer Bildreferenz mindestens ein Referenzwert und ein entsprechendes Datenelement zugeordnet werden, wobei mittels einer Anzeigeeinheit dem Benutzer Bilddaten angezeigt werden und mittels eines Blickrichtungsmoduls ein der Blickrichtung des Benutzers entsprechender Bilddatenausschnitt der angezeigten Bilddaten bestimmt wird, und wobei mittels des Vergleichsmoduls der Bilddatenausschnitt mit Bildreferenzen verglichen wird und ein Datenelement basierend auf diesem Vergleich selektiert wird. Mit einer solchen Ausführungsvariante lässt sich insbesondere die Steuerung eines Computers auf eine intuitive und einfache Art durchführen. So können sich die Bilddaten beispielsweise auf den Desktop eines Computer Displays beziehen. Der Benutzer kann dann beispielsweise den Mauszeiger gemäss der Blickrichtung steuern und den Mausklick beispielsweise durch ein Anklopfen des Tastaturrandes mit dem Daumen auslösen.

In einer Ausführungsvariante werden in der Lookup-Tabelle Sequenzen von Referenzwerten sowie zugeordnete Datenelemente abgespeichert, wobei erfasste Erschütterungswerte mittels eines Sequenzmoduls zu Sequenzen von Erschütterungswerten aufgearbeitet werden und wobei mittels des Vergleichsmoduls Sequenzen von Erschütterungswerten mit Sequenzen von Referenzwerten der Lookup-Tabelle verglichen werden und mindestens ein einer Sequenz von Referenzwerten zugeordnetes Datenelement selektiert wird. Eine solche Ausführungsvariante hat den Vorteil, dass auch kompliziertere Körperbewegungen wie beispielsweise das Drehen der Hand und das Anschliessende rasche Schliessen der Hand einem Datenelement zugeordnet werden kann.

In einer weiteren Ausführungsvariante wird dem Benutzer die Übertragung eines Datenelements an das Endgerät mittels einer Signalisierungsvorrichtung signalisiert. Eine solche Ausführungsvariante hat insbesondere den Vorteil, dass der Benutzer informiert wird, sobald ein Datenelement an das Endgerät übertragen wurde. Dies kann beispielsweise durch ein in einer Armbanduhr eingebauten Vibrator oder durch die Anzeige eines entsprechenden Ikons mittels der Anzeigeeinheit erfolgen.

In einer anderen Ausführungsvariante wird dem Benutzer das Erreichen von Punkten einer Körperbewegung mittels einer Rückkopplungsvorrichtung signalisiert. Beispielsweise umfasst die Rückkopplungsvorrichtung mechanische Mittel, wie beispielsweise ein an der Armbanduhr angebrachter Vibrator welcher eine kurze, einem Mausklick ähnliche Vibration auslöst, sobald der Benutzer eine bestimmbare Körperbewegung, wie beispielsweise eine 90° Drehung der Hand, abgeschlossen hat. Ein solches Verfahren hat insbesondere den Vorteil, dass der Benutzer über die Durchführung von Körperbewegungen informiert bleibt.

In einer weiteren Ausführungsvariante werden in der Lookup-Tabelle Lagereferenzen und zugeordnete Datenelemente abgespeichert, wobei mittels eines Lagemoduls Körper-Lagedaten des Benutzers erfasst werden und wobei mittels des Vergleichsmoduls Lagereferenzen und Körper-Lagedaten verglichen werden und ein entsprechendes Datenelement selektiert wird. Ein solches Verfahren hat insbesondere den Vorteil, dass beispielsweise im Sitzen ein anderes Datenelement selektierbar ist als im Stehen oder im Gehen. So kann sich beispielsweise eine 90° Drehung der Hand im Sitzen auf ein Umleiten auf ein Festnetztelefon eines Anrufs an ein Mobilfunktelefon beziehen, währenddem sich dieselbe Körperbewegung im Stehen oder Gehen auf ein Entgegennehmen eines Anrufs mit dem Mobilfunktelefon bezieht.

In einer anderen Ausführungsvariante werden dem Benutzer Bilddaten mittels eines Retinal-Scanning-Displays angezeigt und/oder die Blickrichtung des Benutzers wird mittels eines Eye-Tracking-Systems bestimmt. Eine solche Ausführungsvariante hat insbesondere den Vorteil, dass eine Freihandbedienung eines Endgeräts ermöglicht wird indem mittels des Eye-Tracking-Systems und dem Retinal-Scanning-Displays bestimmt wird, welches Datenelement der Benutzer betrachtet und beispielsweise mittels eines Zusammenführens oder Zusammenschlagens von Daumen und Zeigerfinger dieses Datenelement selektiert wird und an ein Endgerät übertragen wird. Eine solche Ausführungsvariante hat auch den Vorteil, dass handelsübliche Komponenten für die Durchführung des erfindungsgemässen Verfahrens verwendet werden können.

In einer weiteren Ausführungsvariante werden das Anzeigen von Bilddaten und das Erfassen der Blickrichtung des Benutzers mittels eines interaktiven MEMSRSD durchgeführt. Eine solche Ausführungsvariante hat insbesondere den Vorteil, dass stark miniaturisierbare Komponenten verwendet werden können, welche beispielsweise einfach an einer Brille des Benutzers angebracht werden können.

In einer anderen Ausführungsvariante wird der Beschleunigungssensor gemäss bestimmbarer Deaktivierungskriterien in einen stromsparenden Idle-Modus gebracht, wobei der Beschleunigungssensor durch die Wahl der Blickrichtung des Benutzers auf ein bestimmbares Aktivierungs-Bildelement der angezeigten Bilddaten aus dem stromsparenden Idle-Modus aktiviert wird. Eine solche Ausführungsvariante hat insbesondere den Vorteil, dass ein optimaler Energieverbrauch erzielt werden kann. Die Deaktivierungskriterien können beispielsweise darin bestehen, dass der Benutzer das erfindungsgemässe Verfahren während einem bestimmbaren Zeitintervall nicht durchgeführt hat und danach der stromsparende Idle-Modus aktiviert wird. Die Deaktivierungskriterien können insbesondere auch benutzerspezifisch, benutzeradaptierbar und/oder gemäss einem definierbaren Lehrmechanismus ausgestaltet sein.

In einer anderen Ausführungsvariante wird der Beschleunigungssensor mittels eines Energiespeichers und/oder mittels eines Solargenerators und/oder mittels eines automatischen Bewegungsgenerators und/oder mittels eines Brennstoffzellen-Systems mit elektrischer Energie versorgt. Eine solche Ausführungsvariante hat insbesondere den Vorteil, dass handelsübliche Systeme für die Energieversorgung verwendet werden können. Eine solche Ausführungsvariante hat auch den Vorteil, dass durch die Wahl des Energieversorgungssystems beispielsweise eine besonders hohe Verfügbarkeit z.B. über Jahre hinweg, eine besonders miniaturisierte Ausgestaltung oder eine besonders kostengünstige Herstellung ermöglicht wird.

In einer weiteren Ausführungsvariante wird in der Lookup-Tabelle ein Datenelement mit einer Gerätekennung abgespeichert. Eine solche Ausführungsvariante hat den Vorteil, dass das Klopfen mit dem Zeigefinger auf eine harte Unterlage beispielsweise das Einschalten eines Projektors bewirkt, währenddem das Klopfen des Mittelfingers das Ausschalten der Raumbeleuchtung bewirkt. Weiter sind unterschiedliche Muster möglich, wie Finger Klick zwischen Daumen und Zeigefinger für die Funktion "Nächste Folie", zwischen Daumen und Mittelfinger für die Funktion "Eine Folie zurück", Doppel Klick zwischen Daumen und Zeigerfinger für "Gehe zu erster Folie", etc. Weiter kann das Reiben von Fingern oder das Schnipsen mit den Fingern ebenfalls durch die Vorrichtung aufgenommen werden und es können entsprechende Datenelemente selektiert und an ein Endgerät übertragen werden. Somit kann eine sehr komplexe Körpersprache zur Übertragung von Datenelementen an ein Endgerät entwickelt werden.

### Kurze Beschreibung der Zeichnung(en)

Nachfolgend werden Ausführungsvarianten der vorliegenden Erfindung anhand von Beispielen beschrieben. Die Beispiele der Ausführungen werden durch folgende beigelegte Figur(en) illustriert:

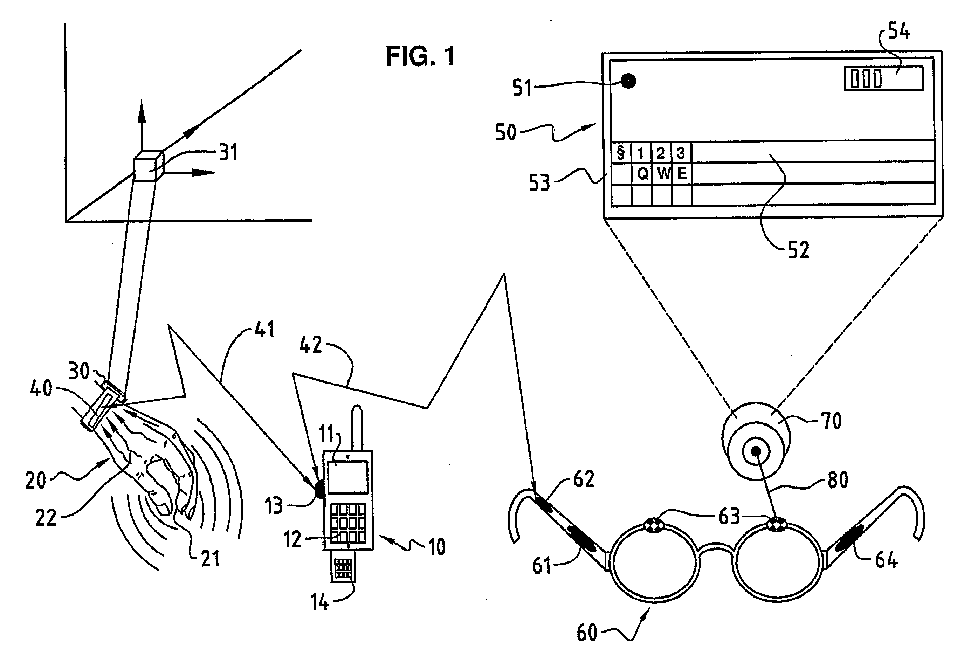

Figur 1 zeigt ein Blockdiagramm mit den einzelnen Bestandteilen des erfindungsgemässen Systems zur körpergesteuerten Übertragung von Datenelementen an ein Endgerät.

### Ausführungsform(en) der Erfindung

In Figur 1 bezieht sich das Bezugszeichen 31 auf einen Beschleunigungssensor. Wie in Figur 1 gezeigt kann der Beschleunigungssensor 31 beispielsweise in einer Armbanduhr 30 angeordnet sein. Beschleunigungssensoren sind im Stand der Technik bekannt und werden beispielsweise von der Firma VTI Technologies (www.vti.fi) hergestellt und vertrieben. Der Beschleunigungssensor 31 wird im Stand der Technik auch als Accelerometer bezeichnet. Der Beschleunigungssensor 31 kann hoch integriert hergestellt werden und lässt sich so einfach als zusätzliche Vorrichtung an einer Armbanduhr 30 anbringen. Der Beschleunigungssensor 31 kann sowohl ein-, zwei- als auch drei-dimensionale Beschleunigungswerte und/oder Erschütterungswerte erfassen. Die Beschleunigungssensoren können auch so ausgelegt werden, dass nicht nur 3D sondern auch 6D Messungen möglich sein. Somit können gleichzeitig 3D-Kräfte und 3D-Drehmomente aufgenommen werden. Mit dem Begriff Beschleunigung wird hier eine eher deterministische Grösse bezeichnet wie sie beispielsweise bei einer definierbaren Bewegung eines Körperteils, wie beispielsweise dem Drehen des Handgelenks oder dem Beugen des Unterarms, entsteht. Mit dem Begriff Erschütterung wird hier eine eher chaotische Grösse bezeichnet wie sie beispielsweise bei der Erschütterung von Handteilen beim raschen Zusammenschlagen von Zeigefinger und Daumen oder beim raschen Anklopfen einer harten Unterlage durch einen Finger entsteht. Im Stand der Technik sind Bewegungssensoren bekannt, welche wenige tausendstel eines g (g bezeichnet die Schwerebeschleunigung auf der Erde und beträgt ungefähr 9.81 m/s²) bis einige tausend g erfassen können. Bei der Erfassung von kleineren Beschleunigungswerten lässt sich insbesondere die Position eines Gegenstands über eine längere Zeitspanne genau erfassen und verfolgen. Bei der Erfassung von grösseren Beschleunigungswerten lassen sich insbesondere Vorgänge welche mit einer hohen Dynamik ablaufen detektieren. Die in Figur 1 gezeigte Armbanduhr verfügt über die notwendigen Mittel für die Anordnung eines Beschleunigungssensors 31 sowie für die Weiterverarbeitung der durch den Beschleunigungssensor 31 erfassten Beschleunigungswerte und/oder Erschütterungswerte. Die Armbanduhr 30 und damit der Beschleunigungssensor 31 ist wie in Figur 1 gezeigt am Handgelenk einer Hand 20 eines Benutzers angebracht. Die Armbanduhr 30 kann eine drahtlose Kommunikationsschnittstelle 40 umfassen. Wie in Figur 1 gezeigt kann der Benutzer durch geeignete Bewegung der Finger 21 Beschleunigungswellen und/oder Erschütterungswellen 22 auslösen welche beispielsweise über die Handknochen und das Gewebe der Hand 20 des Benutzers an die Armbanduhr 30 übertragen werden und vom Beschleunigungssensor 31 als Beschleunigungswerte und/oder Erschütterungswerte erfasst werden können.

In Figur 1 bezieht sich das Bezugszeichen 10 auf ein Endgerät. Das Endgerät 10 kann ein Palmtop Computer, ein Laptop Computer, ein Mobilfunktelefon, ein Fernsehapparat, ein Videoprojektor, ein Geldautomat, eine Spielstation oder irgendein anderes Endgerät sein. Als Endgerät wird hier ein Gerät bezeichnet welches von einem Benutzer über eine Eingabevorrichtung wie beispielsweise eine Tastatur, Bedienungsknöpfe oder Schalter bedient werden kann. In Figur 1 ist als Endgerät 10 ein Mobilfunktelefon dargestellt. Das Endgerät 10 kann einen Display 11, eine Eingabevorrichtung 12, eine drahtlose Kommunikationsschnittstelle 13 und/oder eine Identifikationskarte 14 umfassen.

In Figur 1 bezieht sich das Bezugszeichen 60 auf eine Kommunikationsbrille für die Anzeige von Bilddaten und für die Erfassung der Blickrichtung des Benutzers. Die Kommunikationsbrille 60 umfasst eine Anzeigeeinheit zur Anzeige von Bilddaten an den Benutzer sowie über ein Blickrichtungserfassungsmodul zur Erfassung der Blickrichtung des Benutzers. Die Anzeigeeinheit und das Blickrichtungserfassungsmodul können wie in Figur 1 gezeigt als interaktives MEMSRSD 63 (MEMSRSD: Micro-Electro-Mechanical Systems Retinal Scanning Display) ausgeführt sein. Mittels des interaktiven MEMSRSD 63 können Büddaten über Lichtstrahlen 80 direkt auf die Retina eines Auges 70 des Benutzers projiziert werden und es können die Koordinaten des vom Benutzer fokussierten Bildes respektive die Blickrichtung des Benutzers erfasst werden. Die Kommunikationsbrille 60 kann eine drahtlose Kommunikationsschnittstelle 62, eine Steuerelektronik 61 und eine Energiequelle 64 umfassen. Mittels der Anzeigeeinheit der Kommunikationsbrille 60 respektive dem interaktiven MEMSRSD 63 können dem Benutzer Bilddaten so dargestellt werden, dass für den Benutzer der Eindruck entsteht, beispielsweise das in Figur 1 gezeigte virtuelle Bild 50 zu sehen. Mittels des Blickerfassungsmoduls der Kommunikationsbrille 60 respektive dem interaktiven MEMSRSD 63 kann erfasst werden, welche Bilddaten des virtuellen Bildes 50 der Benutzer betrachtet. So kann mittels der Anzeigeeinheit der Kommunikationsbrille 60 auf einem Ausschnitt 53 der Retina des Benutzers beispielsweise eine Tastatur 52, ein Konfigurationspunkt 51 oder ein Menu 54 angezeigt werden, wobei mittels des Blickerfassungsmoduls der Kommunikationsbrille 60 erfasst werden kann, welches der im virtuellen Bild 50 dargestellten Elemente der Benutzer gerade betrachtet.

Über die erwähnten drahtlosen Kommunikationsschnittstellen sind Datenverbindungen 41, 42 erstellbar. Die drahtlosen Kommunikationsschnittstellen können beispielsweise als Bluetooth-Schnittstelle, als WLAN-Schnittstelle, als ZigBee-Schnittstelle oder als irgendeine andere drahtlose Kommunikationsschnittstelle, insbesondere als eine NFC-Schnittstelle (NFC: near field communication), ausgeführt sein. Um den Energieverbrauch zu minimieren können gewisse der drahtlosen Kommunikationsschnittstellen als unidirektionale Kommunikationsschnittstellen ausgestaltet sein. Über die Datenverbindungen 41, 42 können erfasste Erschütterungswerte, Bilddaten, Datenelemente, Daten über die Blickrichtung des Benutzers, Steuerdaten oder irgendwelche andere Daten zwischen den beschriebenen Geräten und Komponenten übermittelt werden. Selbstverständlich sind nicht nur die in Figur 1 schematisch dargestellten Datenverbindungen 41, 42, sondern beispielsweise auch eine Datenverbindung zwischen der drahtlosen Kommunikationsschnittstelle der Armbanduhr 30 und der drahtlosen Kommunikationsschnittstelle der Kommunikationsbrille 60 denkbar.

Die erwähnten Geräte und Komponenten, also beispielsweise die Armbanduhr 30, das Endgerät 10 oder die Kommunikationsbrille 60, können Mittel zur Speicherung von Daten und Softwaremodulen sowie Mittel für die Abarbeitung von Softwaremodulen, also insbesondere einen Mikroprozessor mit einem geeigneten Daten- und Softwarespeicher, umfassen. Dabei können die Softwaremodule so ausgelegt sein, dass mittels der Datenverbindungen 41, 42 sowie geeigneter Kommunikationsprotokolle ein verteiltes System für die Durchführung der nachfolgend beschriebenen Funktionen und Abläufe zur Verfügung gestellt wird. Selbstverständlich lassen sich die Softwaremodule mittels moderner Entwicklungsumgebungen und Softwaresprachen in relativ kurzer Zeit entwickeln und zur Verfügung stellen.

Für die körpergesteuerte Übertragung eines Datenelements an ein Endgerät 10 werden zuerst Referenzwerte und zugeordnete Datenelemente in einer Lookup-Tabelle abgespeichert. Die Lookup-Tabelle kann in irgendeinem Speicherbereich der erwähnten Geräte und Komponenten angebracht sein, beispielsweise in einem Speicherbereich der Armbanduhr 10. Für die Abspeicherung der Referenzwerte und zugeordneten Datenelemente verfügt beispielsweise die Armbanduhr 10 über ein Softwaremodul und eine Anzeigeeinheit zur sequentiellen Anzeige von Datenelementen sowie zur Erfassung von während der Anzeige eines Datenelements erfassbaren Erschütterungswerten. So kann beispielsweise während einer Trainingsphase dem Benutzer das Datenelement "j" (für einen Ja Entscheid) angezeigt werden, wobei der Benutzer die von ihm gewünschte Körperbewegung zur Selektion des Datenelements "j" durchführt, beispielsweise ein Klopfen des Zeigefingers auf eine harte Unterlage wie ein Tisch. Beispielsweise mittels eines geeigneten Softwaremoduls werden charakteristische Merkmale aus den so erfassten Erschütterungswerten, beispielsweise die mittlere Beschleunigung und die maximale Beschleunigung, erfasst und als Referenzwerte in der Lookup-Tabelle abgespeichert, wobei diesen Referenzwerten das Datenelement "j" zugeordnet wird. Mit dieser Methode lassen sich beliebige Referenzwerte und zugeordnete Datenelemente in der Lookup-Tabelle abspeichern. Selbstverständlich ist des für den Fachmann klar, dass für die Verarbeitung der Erschütterungswerte beispielsweise geeignete Methoden der Signalverarbeitung, wie beispielsweise ein Maximum-Likelihood-Test, ein Markov-Modell, ein künstliches neuronales Netzwerk oder irgendeine andere geeignete Methode der Signalverarbeitung verwendet werden kann. Es ist zudem auch möglich, bei der Abspeicherung der Referenzwerte zugleich Bildreferenzen von vom Benutzer über die Kommunikationsbrille 60 angezeigten und entsprechend der Blickrichtung des Benutzers betrachteten Bilddaten abzuspeichern.

Die Armbanduhr 30 umfasst anschliessend eine Lookup-Tabelle mit abgespeicherten Referenzwerten, Datenelementen sowie allenfalls Bildreferenzen. Der Benutzer kann dann beispielsweise durch ein Klopfen mit dem Zeigefinger auf eine harte Unterlage das Weiterschalten von Bildern während einer Diabildpräsentation, das Annehmen eines ankommenden Anrufs eines Mobilfunktelefons oder irgendeine andere Funktion eines Endgeräts auslösen. Dabei werden Erschütterungswerte, welche durch das Klopfen entstehen, vom Beschleunigungssensor erfasst und über geeignete Mittel, wie beispielsweise eine Datenverbindung zwischen dem Beschleunigungssensor und einem Endgerät mit einem leistungsfähigen Mikroprozessor und beispielsweise abgespeicherten, als Softwaremodul ausgeführtem Vergleichsmodul, an das Vergleichsmodul übertragen. Das Vergleichsmodul greift anschliessend auf Referenzwerte der Lookup-Tabelle zu und vergleicht diese Referenzwerte mit den erfassten Erschütterungswerten. Selbstverständlich kann dieser Vergleich auf verschiedenen Methoden der Informatik und Signalverarbeitung, beispielsweise auf einem Maximum-Likelihood-Test, auf einem Markov-Modell oder auf einem künstlichen neuronalen Netzwerk, basieren. Sobald durch das Vergleichsmodul ein Referenzwert und die erfassten Beschleunigungswerte und/oder Erschütterungswerte als genügend übereinstimmend eingestuft werden, dann kann das dem Referenzwert zugeordnete Datenelement, beispielsweise durch ein als Softwaremodul ausgeführtes Übertragungsmodul, an das Endgerät übertragen werden. Das Datenelement umfasst beispielsweise ein Zeichen gemäss dem ASCII Standard, einen codierten Steuerbefehl gemäss einem Standard zur Steuerung eines Endgeräts oder irgendein anderes Datenelement. Zusammen mit der Kommunikationsbrille ist es zudem möglich, dass beispielsweise durch ein Klopfen mit dem Zeigefinger ein vom Benutzer betrachteter Menueintrag von dem Benutzer angezeigten Bilddaten selektiert und ausgeführt wird. Selbstverständlich kann sich der Menueintrag auf eine Funktion zur Steuerung des Endgeräts 10, wie beispielsweise das Nachschlagen eines Eintrags in einem Adressbuch, oder auf irgendeine andere Funktion zur Steuerung des Endgeräts 10 beziehen.

Beispielsweise durch das Zusammenführen oder Zusammenschlagen von Daumen und Zeigefinger werden in der Hand und im Armgelenk mechanische Wellen ausgelöst, welche für diese Körperbewegung charakteristisch sind und welche mechanischen Wellen über einen in einer Armbanduhr angebrachten Beschleunigungssensor, also beispielsweise im Gehäuse der Armbanduhr angebrachten Beschleunigungssensor, erfasst werden können. Die Fortleitung dieser mechanischen Wellen erfolgt sowohl über das Gewebe als auch die Knochen der Hand und des Handgelenks respektive über andere Körperteile. Durch eine geeignete Verarbeitung der erfassten Erschütterungswerte können charakteristische Merkmale bestimmt werden welche es erlauben, Datenelemente körpergesteuert zu Selektieren und an ein Endgerät zu übertragen. Dabei umfassen die durch Körperbewegungen verursachten mechanischen Wellen jeweils Merkmale welche für die betreffende Körperbewegung charakteristisch sind, sodass die körpergesteuerte Selektion eines Datenelements und Übertragung an ein Endgerät für eine grosse Vielzahl von Datenelementen ermöglicht wird.

## Patentansprüche

1. Verfahren zur körpergesteuerten Übertragung von zu selektierenden Datenelementen an ein Endgerät (10), wobei in einer Lookup-Tabelle Referenzwerte sowie zugeordnete Datenelemente abgespeichert werden, **dadurch gekennzeichnet,**
**dass** mittels mindestens eines an einer Körperstelle eines Benutzers anbringbaren Beschleunigungssensors (31) durch Körperbewegungen des Benutzers beeinflussbare Erschütterungswerte erfasst werden,
**dass** mittels eines Vergleichsmoduls Erschütterungswerte mit Referenzwerten verglichen werden und mindestens ein einem Referenzwert zugeordnetes Datenelement selektiert wird, und
**dass** mittels eines Übertragungsmoduls das mindestens eine selektierte Datenelement an das Endgerät (10) übertragen wird.

2. Verfahren nach Anspruch 1, **dadurch gekennzeichnet,**
**dass** in der Lookup-Täbelle Bildreferenzen abgespeichert werden, wobei einer Bildreferenz mindestens ein Referenzwert und ein entsprechendes Datenelement zugeordnet werden,
**dass** mittels einer Anzeigeeinheit dem Benutzer Bilddaten angezeigt werden und mittels eines Blickrichtungsmoduls ein der Blickrichtung des Benutzers entsprechender Bilddatenausschnitt der angezeigten Bilddaten bestimmt wird, und
**dass** mittels des Vergleichsmoduls der Bilddatenausschnitt mit Bildreferenzen verglichen wird und ein Datenelement basierend auf diesem Vergleich selektiert wird.

3. Verfahren nach einem der Ansprüche 1 bis 2, **dadurch gekennzeichnet, dass** in der Lookup-Tabelle Sequenzen von Referenzwerten sowie zugeordnete Datenelemente abgespeichert werden, dass erfasste Erschütterungswerte mittels eines Sequenzmoduls zu Sequenzen von Erschütterungswerten aufgearbeitet werden und dass mittels des Vergleichsmoduls Sequenzen von Erschütterungswerten mit Sequenzen von Referenzwerten der Lookup-Tabelle verglichen werden und mindestens ein einer Sequenz von Referenzwerten zugeordnetes Datenelement selektiert wird.

4. Verfahren nach einem der Ansprüche 1 bis 3, **dadurch gekennzeichnet, dass** dem Benutzer die Übertragung eines Datenelements an das Endgerät mittels einer Signalisierungsvorrichtung signalisiert wird.

5. Verfahren nach einem der Ansprüche 1 bis 4, **dadurch gekennzeichnet**, das dem Benutzer das Erreichen von Punkten einer Körperbewegung mittels einer Rückkopplungsvorrichtung signalisiert wird.

6. Verfahren nach einem der Ansprüche 1 bis 5, **dadurch gekennzeichnet, dass** in der Lookup-Tabelle Lagereferenzen und zugeordnete Datenelemente abgespeichert werden, dass mittels eines Lagemoduls Körper-Lagedaten des Benutzers erfasst werden und dass mittels des Vergleichsmoduls Lagereferenzen und Körper-Lagedaten verglichen werden und ein entsprechendes Datenelement selektiert wird.

7. Verfahren nach einem der Ansprüche 2 bis 6, **dadurch gekennzeichnet, dass** dem Benutzer Bilddaten mittels eines Retinal-Scanning-Displays angezeigt werden und/oder dass die Blickrichtung des Benutzers mittels eines Eye-Tracking-Systems bestimmt wird.

8. Verfahren nach einem der Ansprüche 2 bis 7, **dadurch gekennzeichnet, dass** das Anzeigen von Bilddaten und das Erfassen der Blickrichtung des Benutzers mittels eines interaktiven MEMSRSD (63) durchgeführt werden.

9. Verfahren nach einem der Ansprüche 2 bis 8, **dadurch gekennzeichnet, dass** der mindestens eine Beschleunigungssensor (31) gemäss bestimmbarer Deaktivierungskriterien in einen stromsparenden Idle-Modus gebracht wird und dass der mindestens eine Beschleunigungssensor durch die Wahl der Blickrichtung des Benutzers auf ein bestimmbares Aktivierungs-Bildelement (51) der angezeigten Bilddaten (53) aus dem stromsparenden Idle-Modus aktiviert wird.

10. Verfahren nach einem der Ansprüche 1 bis 9, **dadurch gekennzeichnet, dass** der mindestens eine Beschleunigungssensor (31) mittels eines Energiespeichers und/oder mittels eines Solargenerators und/oder mittels eines automatischen Bewegungsgenerators und/oder mittels eines Brennstoffzellen-Systems mit elektrischer Energie versorgt wird.

11. Verfahren nach einem der Ansprüche 1 bis 10, **dadurch gekennzeichnet, dass** in der Lookup-Tabelle ein Datenelement mit einer Gerätekennung abgespeichert wird.

12. System zur körpergesteuerten Übertragung von zu selektierenden Datenelementen an ein Endgerät (10), wobei das System eine Lookup-Tabelle zur Abspeicherung von Referenzwerten sowie zugeordnete Datenelementen umfasst, **dadurch gekennzeichnet,**
**dass** das System mindestens einen an einer körperstelle eines Benutzers anbringbarer Beschleunigungssensor (31) zur Erfassung von durch Körperbewegungen des Benutzers beeinflussbare Erschütterungswerte umfasst,
**dass** das System ein Vergleichsmodul zum Vergleich von Erschütterungswerten mit Referenzwerten umfasst, wobei durch das Vergleichsmodul ein einem Referenzwert zugeordnetes Datenelement selektierbar ist, und
**dass** das System ein Übertragungsmodul zur Übertragung des selektierten Datenelements an ein Endgerät (10) umfasst.

13. System nach Anspruch 12, **dadurch gekennzeichnet,**
**dass** in der Lookup-Tabelle Bildreferenzen abspeicherbar sind, wobei einer Bildreferenz mindestens ein Referenzwert und ein entsprechendes Datenelement zuordenbar sind,
**dass** das System eine Anzeigeeinheit zur Anzeige von Bilddaten an den Benutzer und ein Blickrichtungserfassungsmodul zur Erfassung der Blickrichtung des Benutzers sowie zur Bestimmung eines der Blickrichtung des Benutzers entsprechenden Bilddatenausschnitt umfasst, und
**dass** das Vergleichsmodul Mittel umfasst zum Vergleich eines Bilddatenausschnitts mit Bildreferenzen und zur auf diesem Vergleich basierenden Selektion eines Datenelements.

14. System nach einem der Ansprüche 12 bis 13, **dadurch gekennzeichnet, dass** in der Lookup-Tabelle Sequenzen von Referenzwerten sowie zugeordnete Datenelemente abspeicherbar sind, dass das System ein Sequenzmodul umfasst für die Erfassung und Aufarbeitung von Sequenzen von Erschütterungswerten, und dass das Vergleichsmodul Mittel umfasst für den Vergleich von Sequenzen von Erschütterungswerte mit Sequenzen von Referenzwerten sowie für die Selektion eines einer Sequenz von Referenzwerten zugeordnetem Datenelement.

15. System nach einem der Ansprüche 12 bis 14, **dadurch gekennzeichnet, dass** das System eine Signalisierungsvorrichtung zur Signalisierung an den Benutzer der Übertragung eines Datenelements an das Endgerät umfasst.

16. System nach einem der Ansprüche 12 bis 15, **dadurch gekennzeichnet, dass** das System eine Rückkopplungsvorrichtung zur Signalisierung an den Benutzer des Erreichens von Punkten einer Körperbewegung umfasst.

17. System nach einem der Ansprüche 12 bis 16, **dadurch gekennzeichnet, dass** in der Lookup-Tabelle Lagereferenzen und zugeordnete Datenelemente abspeicherbar sind, wobei mittels eines Lagemoduls Körper-Lagedaten des Benutzers erfassbar sind und mittels des Vergleichsmoduls Lagereferenzen und Körper-Lagedaten vergleichbar sind und ein entsprechendes Datenelement selektierbar ist.

18. System nach einem der Ansprüche 13 bis 17, **dadurch gekennzeichnet, dass** das System ein Retinal-Scanning-Display zur Anzeige von Bilddaten und/oder ein Eye-Tracking System zur Erfassung der Blickrichtung des Benutzers umfasst.

19. System nach einem der Ansprüche 13 bis 18, **dadurch gekennzeichnet, dass** das System ein MEMSRSD (63) zur Anzeige von Bilddaten und zur Erfassung der Blickrichtung des Benutzers umfasst.

20. System nach einem der Ansprüche 13 bis 19, **dadurch gekennzeichnet, dass** das System Mittel umfasst um den mindestens einen Beschleunigungssensor (31) gemäss bestimmbarer Deaktivierungskriterien in einen stromsparenden Idle-Modus zu bringen sowie um durch die Wahl der Blickrichtung des Benutzers auf ein bestimmbares Aktivierungs-Bildelement der dem Benutzer angezeigten Bilddaten aus dem stromsparenden Idle-Modus zu aktivieren.

21. System nach einem der Ansprüche 12 bis 20, **dadurch gekennzeichnet, dass** das System zur elektrischen Energieversorgung einen Energiespeicher und/oder einen Solargenerator und/oder einen automatischen Beschleunigungsgenerator und/oder ein Brenstoffzellen-System umfasst.

22. System nach einem der Ansprüche 12 bis 21, **dadurch gekennzeichnet, dass** eine Gerätekennung zusammen mit dem Datenelement in der Lookup-Tabelle abspeicherbar ist.

## Claims

1. Method of body-controlled transmission to a terminal (10) of data elements to be selected, reference values as well as assigned data elements being stored in a look-up table, **characterised**
**in that** by means of at least one acceleration sensor (31), attachable to a part of the body of a user, vibration values able to be influenced though bodily movements of the user are captured,
**in that** by means of a comparison module, vibration values are compared with reference values, and at least one data element assigned to a reference value is selected, and
by means of a transmission module, the at least one selected data element is transmitted to the terminal (10).

2. Method according to claim 1, **characterised**
**in that** picture references are stored in the look-up table, at least one reference value and a corresponding data element being assigned to a picture reference,
**in that** picture data are shown to the user by means of a display unit, and a picture data cutout from the shown picture data corresponding to the direction of view of the user is determined by means of a view direction module, and
**in that** the picture data cutout is compared with picture references by means of the comparison module, and a data element is selected based on this comparison.

3. Method according to one of the claims 1 to 2, **characterised in that** sequences of reference values as well as assigned data elements are stored in the look-up table, captured vibration values are processed by means of a sequence module into sequences of vibration values, and **in that**, by means of the comparison module, sequences of vibration values are compared with sequences of reference values of the look-up table, and at least one data element assigned to a sequence of reference values is selected.

4. Method according to one of the claims 1 to 3, **characterised in that** the transmission of a data element to the terminal is signaled to the user by means of a signalling device.

5. Method according to one of the claims 1 to 4, **characterised in that** the accomplishment of points of a bodily movement is signaled to the user by means of a feedback device.

6. Method according to one of the claims 1 to 5, **characterised in that** position references and assigned data elements are stored in the look-up table, **in that** body-position data for the user are captured by means of a position module, and **in that** position references and body-position data are compared by means of the comparison module and a corresponding data element is selected.

7. Method according to one of the claims 2 to 6, **characterised in that** picture data are shown to the user by means of a retinal-scanning display and/or the direction of view of the user is determined by means of an eye-tracking system.

8. Method according to one of the claims 2 to 7, **characterised in that** the display of picture data and the capture of the direction of view of the user is carried out by means of an interactive MEMSRSD (63).

9. Method according to one of the claims 2 to 8, **characterised in that** the at least one acceleration sensor (31) is brought into an energy-saving idle mode based on definable deactivation criteria, and **in that** the at least one acceleration sensor is activated out of the energy-saving idle mode, through selection of the direction of view of the user, on a definable activation picture element (51) of the displayed picture data (53).

10. Method according to one of the claims 1 to 9, **characterised in that** the at least one acceleration sensor (31) is supplied with electrical energy by means of an energy store and/or by means of a solar generator and/or by means of an automatic movement generator and/or by means of a fuel cell system.

11. Method according to one of the claims 1 to 10, **characterised in that** a data element is stored with a device identifier in the look-up table.

12. System for body-controlled transmission to a terminal (10) of data elements to be selected, **characterised**
**in that** the system comprises a look-up table for storing reference values as well as assigned data elements,
**in that** the system comprises an acceleration sensor (31) attachable to a part of the body of a user for capturing vibration values able to be influenced by bodily movements of the user,
**in that** the system comprises a comparison module for comparing vibration values with reference values, a data element assigned to a reference value being selectable by the comparison module, and
**in that** the system comprises a transmission module for transmitting the selected data element to a terminal (10).

13. System according to claim 12, **characterised**
**in that** picture references are storable in the look-up table, at least one reference value and a corresponding data element being assignable to a picture reference,
**in that** the system comprises a display unit for display of picture data to the user and a direction-of-view-capture module for capturing the direction of view of the user as well as for determining a picture data cutout corresponding to the direction of view of the user, and
**in that** the comparison module comprises means for comparing a picture data cutout with picture references and for selecting a data element based on this comparison.

14. System according to one of the claims 12 to 13, **characterised in that** sequences of reference values as well as assigned data elements are storable in the look-up table, **in that** the system comprises a sequence module for capturing and processing sequences of vibration values, and **in that** the comparison module comprises means for comparing sequences of vibration values with sequences of reference values as well as for selecting a data element assigned to a sequence of reference values.

15. System according to one of the claims 12 to 14, **characterised in that** the system comprises a signalling device for signalling to the user the transmission of a data element to the terminal.

16. System according to one of the claims 12 to 15, **characterised in that** the system comprises a feedback device for signalling to the user the accomplishment of points of a bodily movement.

17. System according to one of the claims 12 to 16, **characterised in that** position references and assigned data elements are storable in the look-up table, body-position data for the user being able to be captured by means of a position module, and position references and body-position data being comparable by means of the comparison module, and a corresponding data element being selectable.

18. System according to one of the claims 13 to 17, **characterised in that** the system comprises a retinal scanning display for display of picture data and/or an eye tracking system for capturing the direction of view of the user.

19. System according to one of the claims 13 to 18, **characterised in that** the system comprises a MEMSRSD (63) for display of picture data and for capturing the direction of view of the user.

20. System according to one of the claims 13 to 19, **characterised in that** the system comprises means of bringing the at least one acceleration sensor (31) into an energy-saving idle mode according to definable deactivation criteria as well as of activating it out of the energy-saving idle mode, through selection of the direction of view of the user, onto a definable activation picture element of the picture data shown to the user.

21. System according to one of the claims 12 to 20, **characterised in that** the system for electrical energy supply comprises an energy store and/or a solar generator and/or an automatic acceleration generator and/or a fuel cell system.

22. System according to one of the claims 12 to 21, **characterised in that** a device identifier is storable together with the data element in the look-up table.

## Revendications

1. Méthode pour une transmission contrôlée par le corps d'éléments de données à sélectionner à un terminal (10), des valeurs de référence ainsi que des éléments de données y attribués étant enregistrés dans un tableau de référence, **caractérisé**
**en ce qu'**au moyen d'au moins un capteur d'accélération (31), fixable à une partie du corps d'un utilisateur, des valeurs de vibration influençables par des mouvements de corps de l'utilisateur sont saisies,
**en ce qu'**au moyen d'un module de comparaison, des valeurs de vibration sont comparées avec des valeurs de référence, et au moins un élément de données attribué à une valeur de référence est sélectionné, et
**en ce qu'**au moyen d'un module de transmission, le au moins un élément de données sélectionné est transmis au terminal (10).

2. Méthode selon la revendication 1, **caractérisé**
**en ce que** des références d'image sont enregistrées dans le tableau de référence, au moins une valeur de référence et un élément de données correspondant étant attribués à une référence d'image,
**en ce que** des données d'image sont affichées à l'utilisateur au moyen d'une unité d'affichage, et en ce qu'un extrait de données d'image des données d'image montrées correspondant à la direction de vue de l'utilisateur est déterminée au moyen d'un module de direction de vue, et
**en ce que** l'extrait de données d'image est comparée aux références d'image au moyen du module de comparaison, et un élément de données est sélectionné sur la base de cette comparaison.

3. Méthode selon l'une quelconque des revendications 1 à 2, **caractérisé en ce que** des séquences de valeurs de référence ainsi que des éléments de données attribués sont enregistrés dans le tableau de référence, **en ce que** des valeurs de vibration saisies sont conditionnées au moyen d'un module de séquence dans des séquences de valeurs de vibration, et **en ce que**, au moyen du module de comparaison, des séquences de valeurs de vibration sont comparées aux séquences de valeurs de référence du tableau de référence, et au moins un élément de données attribué à une séquence de valeurs de référence est choisi.

4. Méthode selon l'une quelconque des revendications 1 à 3, **caractérisé en ce que** la transmission d'un élément de données au terminal est signalée à l'utilisateur au moyen d'un dispositif de signalisation.

5. Méthode selon l'une quelconque des revendications 1 à 4, **caractérisé en ce que** l'accomplissement de points d'un mouvement corporel est signalé à l'utilisateur au moyen d'un dispositif de rétroaction.

6. Méthode selon l'une quelconque des revendications 1 à 5, **caractérisé en ce que** des références de position et des éléments de données attribués sont enregistrés dans le tableau de référence, **en ce que** des données de position de corps de l'utilisateur sont saisies au moyen d'un module de position, et **en ce que** des références de position et des données de position de corps sont comparées au moyen du module de comparaison et un élément de données correspondant est sélectionné.

7. Méthode selon l'une quelconque des revendications 2 à 6, **caractérisé en ce que** les données d'image sont affichées à l'utilisateur au moyen d'un affichage de balayage de rétine et/ou **en ce que** la direction de vue de l'utilisateur est déterminée au moyen d'un oculomètre.

8. Méthode selon l'une quelconque des revendications 2 à 7, **caractérisé en ce que** l'affichage de données d'image et la saisie de la direction de vue de l'utilisateur est effectuée au moyen d'un MEMSRSD interactif (63).

9. Méthode selon l'une quelconque des revendications 2 à 8, **caractérisé en ce que** le au moins un capteur d'accélération (31) est apporté dans un mode de repos d'économie d'énergie selon des critères de désactivation déterminables, et **en ce que** le au moins un capteur d'accélération est activé du mode de repos d'économie d'énergie, par une sélection de la direction de vue de l'utilisateur sur un élément d'image d'activation déterminable (51) des données d'image affichées (53).

10. Méthode selon l'une quelconque des revendications 1 à 9, **caractérisé en ce que** le au moins un capteur d'accélération (31) est alimenté avec de l'énergie électrique au moyen d'un accumulateur d'énergie et/ou au moyen d'un générateur solaire et/ou au moyen d'un générateur de mouvement automatique et/ou au moyen d'un système de pile à combustible.

11. Méthode selon l'une quelconque des revendications 1 à 10, **caractérisé en ce qu'**un élément de données est enregistré dans le tableau de référence avec un identificateur de dispositif.

12. Système pour une transmission contrôlée par le corps d'éléments de données à sélectionner à un terminal (10), le système comprenant un tableau de référence pour l'enregistrement de valeurs de référence ainsi que d'éléments de données y attribués, **caractérisé**
**en ce que** le système comprend un capteur d'accélération (31) fixable à une partie du corps d'un utilisateur pour saisir des valeurs de vibration influençables par des mouvements corporels de l'utilisateur,
**en ce que** le système comprend un module de comparaison pour comparer des valeurs de vibration avec des valeurs de référence, un élément de données attribué à une valeur de référence étant sélectionnable par le module de comparaison, et
**en ce que** le système comprend un module de transmission pour transmettre l'élément de données sélectionné à un terminal (10).

13. Système selon la revendication 12, **caractérisé**
**en ce que** les références d'image sont enregistrables dans le tableau de référence, au moins une valeur de référence et un élément de données correspondant étant attribuable à une référence d'image,
**en ce que** le système comprend une unité d'affichage pour l'affichage de données d'image à l'utilisateur et un module de saisie de direction de vue pour saisir la direction de vue de l'utilisateur ainsi que pour déterminer un extrait de données d'image correspondant à la direction de vue de l'utilisateur, et
**en ce que** le module de comparaison comprend des moyens pour comparer un extrait de données d'image avec des références d'image et pour sélectionner un élément de données sur la base de cette comparaison.

14. Système selon l'une quelconque des revendications 12 à 13, **caractérisé en ce que** des séquences de valeurs de référence ainsi que des éléments de données attribués sont enregistrables dans le tableau de référence, **en ce que** le système comprend un module de séquence pour saisir et conditionner des séquences de valeurs de vibration, et **en ce que** le module de comparaison comprend des moyens pour comparer des séquences de valeurs de vibration avec des séquences de valeurs de référence ainsi que pour choisir un élément de données attribué à une séquence de valeurs de référence.

15. Système selon l'une quelconque des revendications 12 à 14, **caractérisé en ce que** le système comprend un dispositif de signalisation pour signaler à l'utilisateur la transmission d'un élément de données au terminal.

16. Système selon l'une quelconque des revendications 12 à 15, **caractérisé en ce que** le système comprend un dispositif de rétroaction pour signaler à l'utilisateur l'accomplissement de points d'un mouvement corporel.

17. Système selon l'une quelconque des revendications 12 à 16, **caractérisé en ce que** des références de position et des éléments de données attribués sont enregistrables dans le tableau de référence, des données de position de corps de l'utilisateur pouvant être saisies au moyen d'un module de position, et des références de position et des données de position de corps étant comparables au moyen du module de comparaison, et un élément de données correspondant étant sélectionnable.

18. Système selon l'une quelconque des revendications 13 à 17, **caractérisé en ce que** le système comprend un affichage de balayage de rétine pour afficher des données d'image et/ou un oculomètre pour saisir la direction de vue de l'utilisateur.

19. Système selon l'une quelconque des revendications 13 à 18, **caractérisé en ce que** le système comprend un MEMSRSD (63) pour l'affichage de données d'image et pour la saisie de la direction de vue de l'utilisateur.

20. Système selon l'une quelconque des revendications 13 à 19, **caractérisé en ce que** le système comprend des moyens d'apporter le au moins un capteur d'accélération (31) dans un mode de repos d'économie d'énergie selon des critères de désactivation déterminables ainsi que pour l'activer hors du mode de repos d'économie d'énergie, par la sélection de la direction de vue de l'utilisateur, dans un élément d'image d'activation déterminable des données d'image montrées à l'utilisateur.

21. Système selon l'une quelconque des revendications 12 à 20, **caractérisé en ce que** le système pour l'alimentation en énergie électrique comprend un accumulateur d'énergie et/ou un générateur solaire et/ou un générateur d'accélération automatique et/ou un système de pile à combustible.

22. Système selon l'une quelconque des revendications 12 à 21, **caractérisé en ce que** un identifiant de dispositif est enregistrable avec l'élément de données dans le tableau de référence.
